# EUROPEAN PATENT APPLICATION

(11) **EP 4 520 860 A1**
(43) Date of publication of application: **12.03.2025**
(21) Application number: 24154619.1
(22) Date of filing: 30.01.2024
(51) Int. Cl.: D06F 34/28, D06F 101/00

(54) **METHOD AND APPARATUS FOR CONTROLLING WASHING MACHINE AND STORAGE MEDIUM**

(30) Priority: 08.09.2023 CN 202311159837
(71) Applicant: Beijing Xiaomi Mobile Software Co., Ltd., Beijing 100085 (CN)
(72) Inventor: ZHANG, Bin, Beijing 100085 (CN)
(74) Representative: dompatent von Kreisler Selting Werner - Partnerschaft von Patent- und Rechtsanwälten mbB

(57) **Abstract**

The present disclosure provides a method and apparatus for controlling a washing machine and a storage medium, belonging to the technical field of washing machines. The method includes: controlling (S101) the washing machine to enter a wake-up status based on a user's behavior and/or an operating status of the washing machine; collecting (S 102) voice information of a user; generating (S103) a voice interaction instruction for the washing machine based on the voice information; and controlling (S104) the washing machine to execute the voice interaction instruction.

## Description

### TECHNICAL FIELD

The present disclosure relates to the technical field of washing machines, and more particularly, to a method and apparatus for controlling a washing machine and a storage medium.

### BACKGROUND

At present, with the development of artificial intelligence, natural language processing and other technologies, a voice interaction technology has been widely used in washing machines, which reduces manual operations of users and brings the convenience for people's lives. In order to save energy consumption and reduce misoperation, most of the washing machines need to be controlled to enter a wake-up status.

### SUMMARY

The present disclosure provides a method and apparatus for controlling a washing machine, an electronic device, a computer-readable storage medium, and a computer program product, which at least solves the problem that waking up a washing machine requires more operations from the users, which in turn affects the efficiency of voice interaction of the washing machine due to a low wake-up speed of the washing machine. The technical schemes of the present disclosure are as follows.

According to a first aspect of embodiments of the present disclosure, a method for controlling a washing machine is provided. The method includes: controlling the washing machine to enter a wake-up status based on a user's behavior and/or an operating status of the washing machine in response to not receiving a wake-up instruction for the washing machine; collecting voice information of the user; generating a voice interaction instruction for the washing machine based on the voice information; and controlling the washing machine to execute the voice interaction instruction.

In an embodiment of the present disclosure, the controlling the washing machine to enter the wake-up status based on the user's behavior and/or the operating status of the washing machine includes: controlling the washing machine to enter the wake-up status in response to the user's behavior being to close a bucket door of the washing machine, and/or in response to the bucket door of the washing machine being in a closed status.

In an embodiment of the present disclosure, the controlling the washing machine to enter the wake-up status based on the user's behavior and/or the operating status of the washing machine includes: controlling the washing machine to enter the wake-up status in response to the operating status of the washing machine being to end washing.

In an embodiment of the present disclosure, the controlling the washing machine to enter the wake-up status based on the user's behavior and/or the operating status of the washing machine includes: controlling the washing machine to enter the wake-up status in response to the user's behavior being to approach the washing machine.

In an embodiment of the present disclosure, after controlling the washing machine to enter the wake-up status, the method further includes: acquiring a cumulative wake-up duration of a present wake-up process of the washing machine; and controlling the washing machine to enter a non-wake-up status (also referred to as a sleep mode or a sleep status) in response to the cumulative wake-up duration being greater than a first set duration.

In an embodiment of the present disclosure, prior to controlling the washing machine to enter the non-wake-up status, the method further includes: determining that the user has no voice interaction intent for the washing machine, and/or identifying that the voice interaction instruction is not generated within a second set duration from a current moment, the second set duration is less than or equal to the first set duration.

In an embodiment of the present disclosure, prior to controlling the washing machine to enter the wake-up status, the method further includes: identifying a value of target configuration information of the washing machine as a first set value, the first set value is configured to indicate that the washing machine is controlled to enter the wake-up status based on the user's behavior and/or the operating status of the washing machine in response to not receiving the wake-up instruction for the washing machine.

In an embodiment of the present disclosure, the method further includes: identifying the value of the target configuration information as a second set value, the second set value is configured to indicate that the washing machine is controlled to continuously maintain the non-wake-up status in response to not receiving the wake-up instruction for the washing machine; and controlling the washing machine to continuously maintain the non-wake-up status.

According to a second aspect of embodiments of the present disclosure, an apparatus for controlling a washing machine is provided. The apparatus includes: a control module, configured to control the washing machine to enter a wake-up status based on a user's behavior and/or an operating status of the washing machine in response to not receiving a wake-up instruction for the washing machine; a collection module, configured to collect voice information of the user; and a generation module, configured to generate a voice interaction instruction for the washing machine based on the voice information, the control module is further configured to control the washing machine to execute the voice interaction instruction.

In an embodiment of the present disclosure, the control module is further configured to control the washing machine to enter the wake-up status in response to the user's behavior being to close a bucket door of the washing machine, and/or in response to the bucket door of the washing machine being in a closed status.

In an embodiment of the present disclosure, the control module is further configured to control the washing machine to enter the wake-up status in response to the operating status of the washing machine being to end washing.

In an embodiment of the present disclosure, the control module is further configured to control the washing machine to enter the wake-up status in response to the user's behavior being to approach the washing machine.

In an embodiment of the present disclosure, after controlling the washing machine to enter the wake-up status, the control module is further configured to: acquire a cumulative wake-up duration of a present wake-up process of the washing machine; and control the washing machine to enter a non-wake-up status in response to the cumulative wake-up duration being greater than a first set duration.

In an embodiment of the present disclosure, prior to controlling the washing machine to enter the non-wake-up status, the control module is further configured to: determine that the user has no voice interaction intent for the washing machine, and/or identify that the voice interaction instruction is not generated within a second set duration from a current moment, the second set duration is less than or equal to the first set duration.

In an embodiment of the present disclosure, prior to controlling the washing machine to enter the wake-up status, the control module is further configured to: identify a value of target configuration information of the washing machine as a first set value, the first set value is configured to indicate that the washing machine is controlled to enter the wake-up status based on the user's behavior and/or the operating status of the washing machine in response to not receiving the wake-up instruction for the washing machine.

In an embodiment of the present disclosure, the control module is further configured to: identify the value of the target configuration information as a second set value, the second set value is configured to indicate that the washing machine is controlled to continuously maintain the non-wake-up status in response to not receiving the wake-up instruction for the washing machine; and control the washing machine to continuously maintain the non-wake-up status.

According to a third aspect of embodiments of the present disclosure, an electronic device is provided. The electronic device includes a processor; and a memory configured to store an instruction executable by the processor, where the processor is configured to execute the steps of the method according to the first aspect of embodiments of the present disclosure.

According to a fourth aspect of embodiments of the present disclosure, a computer-readable storage medium is provided, storing a computer program instruction which, when executed by a processor, causes the processor to implement the steps of the method according to the first aspect of embodiments of the present disclosure.

According to a fifth aspect of embodiments of the present disclosure, a computer program product is provided. The computer program product includes a computer program, when the computer program is executed by a processor of an electronic device, causes the processor to implement the steps of the method according to the first aspect of embodiments of the present disclosure.

The technical schemes provided by the embodiments of the present disclosure bring at least the following beneficial effects: the user's behavior and/or the operating status of the washing machine may be considered in response to not receiving the wake-up instruction for the washing machine, such that the washing machine is controlled directly to enter the wake-up status, achieving the voice interaction between the user and the washing machine; and compared with the prior art in which a washing machine is controlled to enter a wake-up status only in response to receiving a wake-up instruction for the washing machine, this scheme simplifies user operations, enables rapid wake-up of the washing machine, and improves the efficiency and flexibility of the voice interaction of the washing machine.

It may be understood that the above general description and the following detailed description are exemplary and illustrative, and not intended to limit the present disclosure.

### BRIEF DESCRIPTION OF THE DRAWINGS

The drawings herein, which are incorporated into the description and constitute a part of the description, illustrate embodiments that are consistent with the present disclosure, and are used together with the description to explain the principles of the present disclosure, rather than constituting an undue limitation on the present disclosure.
FIG. 1 is a flowchart of a method for controlling a washing machine according to an example.
FIG. 2 is a flowchart after a washing machine is controlled to enter a wake-up status in a method for controlling a washing machine according to an example.
FIG. 3 is a flowchart of a method for controlling a washing machine according to another example.
FIG. 4 is a block diagram of a system for controlling a washing machine according to an example.
FIG. 5 is a block diagram of an apparatus for controlling a washing machine according to an embodiment.
FIG. 6 is a block diagram of an electronic device according to an example.

### DETAILED DESCRIPTION

In order to make a person of ordinary skill in the art better understand the technical schemes of the present disclosure, the technical schemes in the embodiments of the present disclosure are clearly and completely described in the following with reference to the accompanying drawings.

It may be noted that the terms "first", "second" and the like in the description and claims, as well as the above-mentioned drawings, of the present disclosure are used to distinguish similar objects, but not necessarily used to describe a specific order or precedence order. It may be understood that data used in this case may be interchanged where appropriate so that the embodiments of the present disclosure described here can be implemented in a sequence other than those illustrated or described herein. The implementations described in the following examples are not all the embodiments consistent with the present disclosure. On the contrary, these embodiments are simply examples of apparatuses and methods consistent with some aspects of the present disclosure, as detailed in the appended claims.

The acquisition, storage, use, processing, etc. of data in the technical schemes of the present disclosure comply with the relevant provisions of laws and regulations.

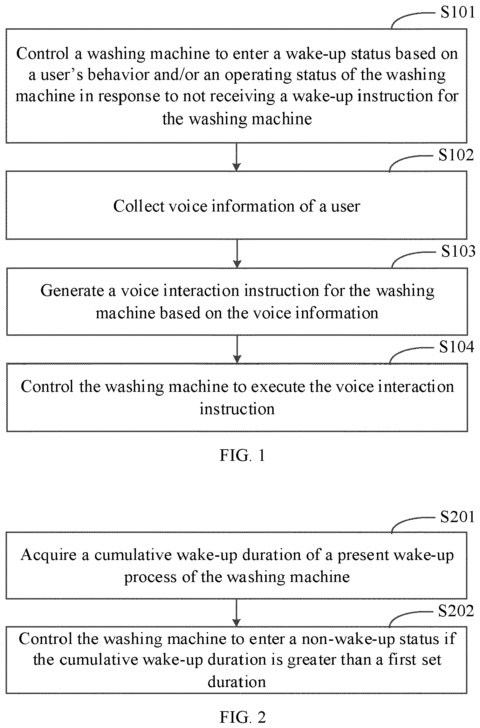

FIG. 1 is a flowchart of a method for controlling a washing machine according to an example. As shown in FIG. 1, the method for controlling the washing machine in this embodiment of the present disclosure includes the following steps.

S101: The washing machine is controlled to enter a wake-up status based on a user's behavior and/or an operating status of the washing machine in response to not receiving a wake-up instruction for the washing machine.

It may be noted that an executive body of the method for controlling the washing machine in this embodiment of the present disclosure is an electronic device. The electronic device includes a mobile phone, a notebook, a desktop computer, a vehicle-mounted terminal, a smart home appliance, a wearable device, or the like. The wearable device may include a wrist-worn device (e.g., a smart watch, or a smart bracelet), a head-mounted device, a foot-mounted device, etc. The method for controlling the washing machine in this embodiment of the present disclosure may be implemented by an apparatus for controlling a washing machine in an embodiment of the present disclosure. The apparatus for controlling the washing machine in this embodiment of the present disclosure may be configured in any electronic device to implement the method for controlling the washing machine in this embodiment of the present disclosure.

It may be noted that the wake-up instruction is not too restrictive, for example, may include a voice instruction, a gesture instruction, and a touch instruction, etc. For example, taking the wake-up instruction being the voice instruction as an example, voice information may be collected from a user, and a recognition text of the user may be obtained by performing voice identification on the voice information of the user; whether the recognition text of the user includes a wake-up word is identified; and the wake-up instruction for the washing machine is determined to be received if the recognition text of the user includes the wake-up word. The wake-up word is not too restrictive, for example, may include "boot", "start", etc.

It may be noted that, in related technologies, a washing machine is controlled to enter a wake-up status only in response to receiving a wake-up instruction for the washing machine. However, in this scheme, the washing machine is controlled to enter the wake-up status based on the user's behavior and/or the operating status of the washing machine in response to not receiving the wake-up instruction for the washing machine. The user's behavior refers to a behavior that triggers the washing machine to enter the wake-up status. The user's behavior is neither a wake-up instruction, nor a behavior of generating the wake-up instruction. The operating status of the washing machine refers to an operating status that triggers the washing machine to enter the wake-up status.

In one implementation, determining the user's behavior may include: collecting images from the user, acquiring a plurality of images, recognizing human actions on the images, and determining the user's behavior.

In one implementation, determining the user's behavior may include: acquiring a motion trajectory of the user; determining the user's behavior as approaching the washing machine if a distance between a trajectory point in the motion trajectory and the washing machine is in a downward trend; and determining the user's behavior as moving away from the washing machine if the distance between the trajectory point in the motion trajectory and the washing machine is in an upward trend.

It may be noted that the operating status of the washing machine is not too restrictive. For example, the operating status may include operating statuses of a plurality of parts of the washing machine, a status in which washing has not started, a status in a washing process, a status in which washing is suspended, a status in which washing ends, etc.

In an embodiment of the present disclosure, controlling the washing machine to enter the wake-up status based on the user's behavior and/or the operating status of the washing machine may include the following several possible implementations.
Manner 1: controlling the washing machine to enter the wake-up status if the user's behavior is to close a bucket door of the washing machine, and/or if the bucket door of the washing machine is in a closed status;
Manner 2: controlling the washing machine to enter the wake-up status if the operating status of the washing machine is to end washing;
Manner 3: controlling the washing machine to enter the wake-up status if the user's behavior is to approach the washing machine; and
Manner 4: collecting user's voice information, performing semantic analysis on the user's voice information, determining that the user has a voice interaction intent for the washing machine, and controlling the washing machine to enter the wake-up status.

It may be noted that any of methods for identifying voice interaction intents in related technologies may be used to identify whether the user has a voice interaction intent for the washing machine, which will not be too restrictive here. The voice interaction intent corresponding to the washing machine is not too restrictive, for example, may include: opening and closing the bucket door, starting the washing process, suspending the washing process, ending the washing process, selecting a washing mode, configuring washing parameters, etc. The washing parameters may include a speed, a temperature, etc.

In some examples, the voice information of the user is identified for voice to obtain the recognition text of the user. Whether the recognition text of the user includes a set keyword is identified. It is determined that the user has a voice interaction intent for the washing machine if the recognition text of the user includes at least one set keyword corresponding to voice interaction intent; and conversely, it is determined that the user has no voice interaction intent for the washing machine if the recognition text of the user does not include the set keyword.

It may be noted that the set keywords are not too restrictive, and different voice interaction intents may correspond to different set keywords. For example, the set keywords corresponding to opening and closing the bucket door may include "Open the bucket door", "Close the bucket door", etc. The set keywords corresponding to "Start the washing process" may include "Start washing", "Washing now", etc. The set keywords corresponding to "Select the washing mode" may include "Mixed mode", "Quick washing mode", etc. The set keywords corresponding to "Configure washing parameters" may include "Speed", "Temperature", etc.

S102: Voice information of the user is collected.

In one implementation, the voice information of the user may be collected through a voice collection device on the washing machine. It may be noted that the voice collection device is not too restrictive, for example, may include a microphone (MIC) module.

S 103 : A voice interaction instruction for the washing machine is generated based on the voice information.

It may be noted that any of methods for generating voice interaction instructions in related technologies may be used to generate the voice interaction instruction, which will not be too restrictive here.

In one implementation, generating the voice interaction instruction for the washing machine based on the voice information includes: performing semantic analysis on the voice information, determining a voice interaction intent of the user for the washing machine, and generating a voice interaction instruction based on the voice interaction intent of the user for the washing machine.

For example, the user may say "Open the bucket door", a semantic analysis may be performed on the voice information to determine that the voice interaction intent of the user for the washing machine is to open the bucket door, and the voice interaction instruction for "Open the bucket door" may be generated based on the voice interaction intent.

For example, the user may say "Start washing", a semantic analysis may be performed on the voice information to determine that the voice interaction intent of the user for the washing machine is to start a washing process, and the voice interaction instruction for "Start the washing process" may be generated based on the voice interaction intent.

For example, the user may say "Mixed mode", a semantic analysis may be performed on the voice information to determine that the voice interaction intent of the user for the washing machine is to select a washing mode, and the voice interaction instruction for "Select a washing mode as a mixed mode" may be generated based on the voice interaction intent.

For example, the user may say "The temperature is 30°C", a semantic analysis may be performed on the voice information to determine that the voice interaction intent of the user for the washing machine is to configure washing parameters, and the voice interaction instruction for "The washing temperature is 30°C" may be generated based on the voice interaction intent.

S104: The washing machine is controlled to execute the voice interaction instruction.

It may be noted that any of methods for executing the voice interaction instructions in related technologies may be used to execute the voice interaction instruction, which will not be too restrictive here.

In an implementation, controlling the washing machine to execute the voice interaction instruction includes: sending the voice interaction instruction to a target part in the washing machine, and controlling the target part to execute the voice interaction instruction. It may be understood that different voice interaction instructions may be executed by different target parts.

It may be noted that the target parts are not too restrictive, for example, may include a bucket door switch, a program controller, a water level switch, a water inlet valve, a drain valve, a heater, a safety switch, etc.

For example, if the voice interaction instruction is "Open the bucket door", "Open the bucket door" may be sent to the bucket door switch, and the bucket door switch is controlled to perform "Open the bucket door".

For example, if the voice interaction instruction is "Start washing", "Start washing" may be sent to the program controller to control the program controller to perform "Start washing".

For example, if the voice interaction instruction is "The temperature is 30 °C", "The washing temperature is 30°C" may be sent to the heater, and the heater is controlled to execute "The washing temperature is 30°C".

The method for controlling the washing machine provided by this embodiment of the present disclosure includes: controlling the washing machine to enter the wake-up status based on the user's behavior and/or the operating status of the washing machine in response to not receiving the wake-up instruction for the washing machine; collecting the voice information of the user; generating a voice interaction instruction for the washing machine based on the voice information; and controlling the washing machine to execute the voice interaction instruction. In this case, the user's behavior and/or the operating status of the washing machine may be considered in response to not receiving the wake-up instruction for the washing machine, such that the washing machine can be controlled directly to enter the wake-up status, achieving the voice interaction between the user and the washing machine. Compared with the prior art in which a washing machine is controlled to enter a wake-up status only in response to receiving a wake-up instruction for the washing machine, this scheme simplifies user operations, enables rapid wake-up of the washing machine, and improves the efficiency and flexibility of the voice interaction of the washing machine.

Based on any of the above embodiments, as shown in FIG. 2, after controlling the washing machine to enter the wake-up status in S101, the method may further include the following steps.

S201: A cumulative wake-up duration of a present wake-up process of the washing machine is acquired.

It may be noted that the present wake-up process refers to a time period between the latest wake-up moment of the washing machine and the current moment.

In one implementation, a timer may be configured to start timing from the latest wake-up moment of the washing machine to obtain the cumulative wake-up duration.

S202: The washing machine is controlled to enter a non-wake-up status if the cumulative wake-up duration is greater than a first set duration.

It may be noted that the first set duration will not be too restrictive, for example, may include a maximum wake-up duration allowed by the washing machine. For example, the first set duration may be 10 seconds.

In an implementation, prior to controlling the washing machine to enter the non-wake-up status, the method further includes: determining that the user has no voice interaction intent for the washing machine, and/or identifying that the voice interaction instruction is not generated within a second set duration from the current moment. In this case, according to the method, the washing machine is controlled to enter the non-wake-up status when the cumulative wake-up duration is relatively long, and the user having no voice interaction intent for the washing machine, and/or no voice interaction instruction being generated within the latest duration, which can prevent the washing machine from being further controlled to enter the non-wake-up status when the user has a voice interaction intent for the washing machine, and/or, a voice interaction instruction is generated within the latest duration, so as to improve the flexibility of voice interaction of the washing machine.

It may be noted that the second set duration is less than or equal to the first set duration. The second set duration will not be too restrictive, for example, may include 5 seconds.

In an implementation, the method further includes: determining that the user has a voice interaction intent for the washing machine, and/or identifying that the voice interaction instruction is generated within a second set duration from the current moment, and controlling the washing machine to continuously maintain the wake-up status. In this case, according to the method, the washing machine is controlled to continuously maintain the wake-up status when the cumulative wake-up duration is relatively long, and the user has a voice interaction intent for the washing machine, and/or a voice interaction instruction is generated within the latest duration, such that the voice interaction between the user and the washing machine can be continued, which improves the reliability of voice interaction of the washing machine.

As another possible implementation, the method further includes: controlling the washing machine to continuously maintain a wake-up status if the cumulative wake-up duration is less than or equal to the first set duration. In this case, according to the method, the washing machine may be controlled to continuously maintain the wake-up status if the cumulative wake-up duration is relatively short after the washing machine is controlled to enter the wake-up status, such that the voice interaction between the user and the washing machine can be continued, which improves the reliability of voice interaction of the washing machine.

In this case, according to the method, the washing machine may be controlled to enter the non-wake-up status if the cumulative wake-up duration is relatively long after the washing machine is controlled to enter the wake-up status, such that the washing machine is avoided from continuously maintaining the wake-up status if the cumulative wake-up time is relatively long, which can save the energy consumption and avoid the washing machine from continuously waking up for a long time.

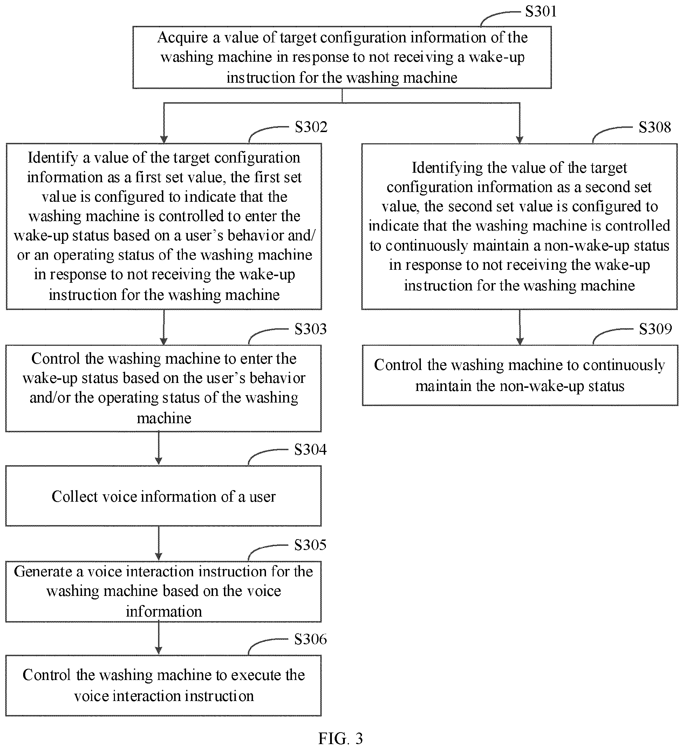

FIG. 3 is a flowchart of a method for controlling a washing machine according to another example. As shown in FIG. 3, the method for controlling the washing machine in this embodiment of the present disclosure includes the following steps.

S301: A value of target configuration information of the washing machine is acquired in response to not receiving a wake-up instruction for the washing machine.

S302: The value of the target configuration information is identified as a first set value, the first set value is configured to indicate that the washing machine is controlled to enter the wake-up status based on a user's behavior and/or an operating status of the washing machine in response to not receiving the wake-up instruction for the washing machine.

It may be noted that the value of the target configuration information may be set by the user For example, the user may configure the value of the target configuration information through a control panel or a remote controller of the washing machine.

It may be noted that the first set duration will not be too restrictive, for example, may be 1.

It may be understood that setting the value of the target configuration information as the first set value indicates that the washing machine has the following functions: controlling the washing machine to enter the wake-up status based on a user's behavior and/or an operating status of the washing machine in response to not receiving the wake-up instruction for the washing machine.

S303: The washing machine is controlled to enter a wake-up status based on a user's behavior and/or an operating status of the washing machine.

S304: Voice information of a user is collected.

S305: A voice interaction instruction for the washing machine is generated based on the voice information.

S306: The washing machine is controlled to execute the voice interaction instruction.

The relevant content of S303-S306 may refer to the above-mentioned embodiments, which will not be repeated here.

S308: The value of the target configuration information is identified as a second set value, the second set value is configured to indicate that the washing machine is controlled to continuously maintain the non-wake-up status in response to not receiving the wake-up instruction for the washing machine.

S309: The washing machine is controlled to continuously maintain the non-wake-up status.

It may be noted that the first set value may be different from the second set value. The second set value will not be too restrictive, for example, may be 0.

It may be understood that setting the value of the target configuration information as the second set value indicates that the washing machine has the following functions: controlling the washing machine to continuously maintain the non-wake-up status in response to not receiving the wake-up instruction for the washing machine.

According to the method for controlling the washing machine provided by this embodiment of the present disclosure, the value of the target configuration information of the washing machine may be considered to control whether the washing machine has entered the wake-up status; the washing machine is controlled to enter the wake-up status based on the user's behavior and/or the operating status of the washing machine in response to not receiving the wake-up instruction for the washing machine and setting the value of the target configuration information as the first set value; or the washing machine is controlled to continuously maintain the non-wake-up status in response to not receiving the wake-up instruction for the washing machine and setting the value of the target configuration information as the second set value.

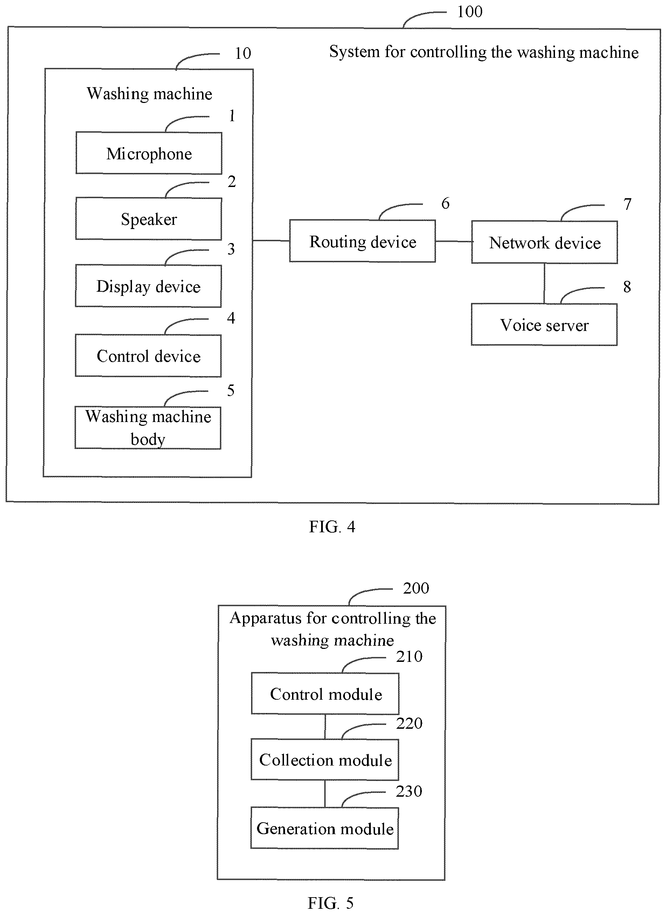

Based on any of the above-mentioned embodiments, as shown in FIG. 4, a system 100 for controlling a washing machine includes a washing machine 10, a routing device 6, a network device 7 and a voice server 8. The washing machine 10 includes a microphone 1, a speaker 2 (e.g., a horn), a display device 3, a control device 4, and a washing machine body 5.

The control device 4 is configured to control the washing machine 10 to enter a wake-up status based on a user's behavior and/or an operating status of the washing machine 10 in response to not receiving a wake-up instruction for the washing machine 10. The microphone 1 is configured to collect voice information of a user. The routing device 6 and the network device 7 are configured to send the voice information to the voice server 8. The voice server 8 is configured to generate a voice interaction instruction for the washing machine 10 based on the voice information. The routing device 6 and the network device 7 are further configured to send the voice interaction instruction to the control device 4. The control device 4 is further configured to control the washing machine 10 to execute the voice interaction instruction.

In an implementation, the display device 3 is configured to display whether the microphone 1 is in a collection status and is further configured to display whether the speaker 2 is in a playing status.

In an implementation, the speaker 2 is configured to play an execution result of the voice interaction instruction.

FIG. 5 is a block diagram of an apparatus for controlling a washing machine according to an example. Referring to FIG. 5, an apparatus 200 for controlling a washing machine according to an embodiment of the present disclosure includes a control module 210, a collection module 220 and a generation module 230.

The control module 210 is configured to control the washing machine to enter a wake-up status based on a user's behavior and/or an operating status of the washing machine in response to not receiving a wake-up instruction for the washing machine.

The collection module 220 is configured to collect voice information of a user.

The generation module 230 is configured to generate a voice interaction instruction for the washing machine based on the voice information.

The control module 210 is further configured to control the washing machine to execute the voice interaction instruction.

In an embodiment of the present disclosure, the control module 210 is further configured to control the washing machine to enter the wake-up status if the user's behavior is to close a bucket door of the washing machine, and/or if the bucket door of the washing machine is in a closed status.

In an embodiment of the present disclosure, the control module 210 is further configured to control the washing machine to enter the wake-up status if the operating status of the washing machine is to end washing.

In an embodiment of the present disclosure, the control module 210 is further configured to control the washing machine to enter the wake-up status if the user's behavior is to approach the washing machine.

In an embodiment of the present disclosure, after controlling the washing machine to enter the wake-up status, the control module 210 is further configured to: acquire a cumulative wake-up duration of a present wake-up process of the washing machine; and control the washing machine to enter a non-wake-up status if the cumulative wake-up duration is greater than a first set duration.

In an embodiment of the present disclosure, prior to controlling the washing machine to enter the non-wake-up status, the control module 210 is further configured to: determine that the user has no voice interaction intent for the washing machine, and/or identify that the voice interaction instruction is not generated within a second set duration from a current moment, the second set duration is less than or equal to the first set duration.

In an embodiment of the present disclosure, prior to controlling the washing machine to enter the wake-up status, the control module 210 is further configured to: identify a value of target configuration information of the washing machine as a first set value, the first set value is configured to indicate that the washing machine is controlled to enter the wake-up status based on the user's behavior and/or the operating status of the washing machine in response to not receiving the wake-up instruction for the washing machine.

In an embodiment of the present disclosure, the control module 210 is further configured to: identify the value of the target configuration information as a second set value, the second set value is configured to indicate that the washing machine is controlled to continuously maintain the non-wake-up status in response to not receiving the wake-up instruction for the washing machine; and control the washing machine to continuously maintain the non-wake-up status.

With respect to the apparatus in the foregoing embodiment, the specific manner in which each module performs the operation has been described in detail in the embodiment of the method, and a detailed description will not be given here.

According to the apparatus for controlling the washing machine provided by this embodiment of the present disclosure, the washing machine is controlled to enter the wake-up status based on the user's behavior and/or the operating status of the washing machine in response to not receiving the wake-up instruction for the washing machine; the voice information of the user is collected; the voice interaction instruction for the washing machine is generated based on the voice information; and the washing machine is controlled to execute the voice interaction instruction. In this case, the user's behavior and/or the operating status of the washing machine may be considered in response to not receiving a wake-up instruction for the washing machine, such that the washing machine can be controlled directly to enter the wake-up status, which can achieve the voice interaction between the user and the washing machine. Compared with the prior art in which a washing machine is controlled to enter a wake-up status only in response to receiving a wake-up instruction for the washing machine, this scheme simplifies user operations, enables rapid wake-up of the washing machine, and improves the efficiency and flexibility of the voice interaction of the washing machine.

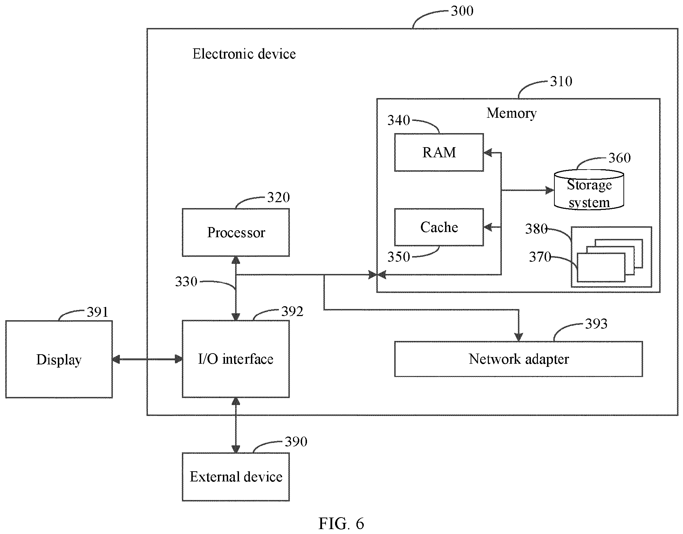

FIG. 6 is a block diagram of an electronic device 300 according to an example.

As shown in FIG. 6, the electronic device 300 includes:

a memory 310 and a processor 320, as well as a bus 330 which is connected to different components (including the memory 310 and the processor 320), where a computer program is stored in the memory 310. The program, when executed by the processor 320, implements the method for controlling the washing machine in the embodiments of the present disclosure.

The bus 330 includes one or more of several types of bus structures, including a memory bus or a memory controller, a peripheral bus, a graphics acceleration port, a processor, or a local bus using any of bus structures. For example, these architectures include, but are not limited to, an industry standard architecture (ISA) bus, a micro channel architecture (MAC) bus, an enhanced ISA bus, a video electronics standards association (VESA) local bus, and a peripheral component interconnection (PCI) bus.

The electronic device 300 typically includes a variety of electronic device readable media. These media may be any available media that can be accessed by the electronic device 300, including volatile and nonvolatile media, and removable and non-removable media.

The memory 310 may include computer system readable media in the form of a volatile memory, such as a random access memory (RAM) 340 and/or a cache memory 350. The electronic device 300 may further include other removable/non-removable, volatile/nonvolatile computer system storage media. By way of example only, the storage system 360 may be configured to read and write non-removable and non-volatile magnetic media (which are not shown in FIG. 6 and are commonly referred to as a "hard disk drive"). Although not shown in FIG. 6, a magnetic disk drive for reading and writing to a removable non-volatile magnetic disk (e.g., "floppy disk"), and an optical disk drive for reading and writing to a removable non-volatile optical disk (e.g., a CD-ROM, a DVD-ROM, or other optical media) may be provided. In these scenarios, each drive may be connected to the bus 330 through one or more data medium interfaces. The memory 310 may include at least one program product having a set of (e.g., at least one) program modules configured to execute functions of the various embodiments of the present disclosure.

A program/utility tool 380 having a set of (at least one) program modules 370 may be stored in, for example, the memory 310. Such program modules 370 include but are not limited to an operating system, one or more application programs, other program modules, and program data. Each of the operating system, one or more application programs, other program modules, and program data or some combination of them, may include an implementation of a network environment. The program module 370 generally executes the functions and/or methods in the embodiments described in the present disclosure.

The electronic device 300 may also communicate with one or more external devices 390 (for example, a keyboard, a pointing device, and a display 391), and may also communicate with one or more devices enabling a user to interact with the electronic device 300, and/or any devices (such as a network card and a modem) enabling the electronic device 300 to communicate with one or more other computing devices. Such communication may be performed through an input/output (I/O) interface 392. Moreover, the electronic device 300 may also communicate with one or more networks (for example, a local area network (LAN), a wide area network (WAN) and/or a public network such as the Internet) through a network adapter 393. As shown in FIG. 6, the network adapter 393 communicates with other modules of the electronic device 300 through the bus 330. It may be understood that although not shown in FIG. 6, other hardware and/or software modules may be used in conjunction with the electronic device 300, and may include but not limited to a microcode, a device driver, a redundant processing unit, an external disk drive array, a RAID system, a magnetic tape drive, a data backup storage system, etc.

The processor 320 executes various functional applications and data processing by running programs stored in the memory 310.

It may be noted that the implementation process and technical principle of the electronic device in this embodiment refer to the foregoing explanation of the method for controlling the washing machine in the embodiments of the present disclosure, and will not be repeated here.

The electronic device provided by this embodiment of the present disclosure may execute the above method for controlling the washing machine. The method includes: controlling the washing machine to enter a wake-up status based on a user's behavior and/or an operating status of the washing machine in response to not receiving a wake-up instruction for the washing machine; collecting voice information of the user; generating a voice interaction instruction for the washing machine based on the voice information; and controlling the washing machine to execute the voice interaction instruction. In this case, the user's behavior and/or the operating status of the washing machine may be considered in response to not receiving the wake-up instruction for the washing machine, such that the washing machine can be controlled directly to enter the wake-up status, which achieves the voice interaction between the user and the washing machine. Compared with the prior art in which a washing machine is controlled to enter a wake-up status only in response to receiving a wake-up instruction for the washing machine, this scheme simplifies user operations, enables rapid wake-up of the washing machine, and improves the efficiency and flexibility of the voice interaction of the washing machine.

In order to implement the above embodiments, the present disclosure further provides a computer-readable storage medium, in which a computer program instruction is stored, where the program instruction, when executed by a processor, implements the steps of the method for controlling the washing machine as provided by the present disclosure.

Optionally, the computer-readable storage medium may be a ROM, a random access memory (RAM), a compact disc read-only memory (CD-ROM), a magnetic tape, a floppy disk, an optical data storage device, etc.

In order to implement the above embodiments, the present disclosure further provides a computer program product including a computer program, when the computer program is executed by a processor of an electronic device, causes the processor to implement the above-mentioned method for controlling the washing machine.

## Claims

1. A method for controlling a washing machine, comprising:
controlling (S101) the washing machine to enter a wake-up status based on a user's behavior and/or an operating status of the washing machine;
collecting (S102, S304) voice information of a user;
generating (S103, S305) a voice interaction instruction for the washing machine based on the voice information; and
controlling (S104, S306) the washing machine to execute the voice interaction instruction.

2. The method according to claim 1, wherein the controlling (S101) the washing machine to enter a wake-up status based on a user's behavior and/or an operating status of the washing machine comprises:
controlling the washing machine to enter the wake-up status in response to the user's behavior being to close a bucket door of the washing machine, and/or in response to the bucket door of the washing machine being in a closed status.

3. The method according to claim 1, wherein the controlling (5101) the washing machine to enter a wake-up status based on a user's behavior and/or an operating status of the washing machine comprises:
controlling the washing machine to enter the wake-up status in response to the operating status of the washing machine being to end washing;
optionally, the controlling (S101) the washing machine to enter a wake-up status based on a user's behavior and/or an operating status of the washing machine comprises:
controlling the washing machine to enter the wake-up status in response to the user's behavior being to approach the washing machine.

4. The method according to any one of claims 1 to 3, after controlling (S101) the washing machine to enter the wake-up status, further comprising:
acquiring (S201) a cumulative wake-up duration of a present wake-up process of the washing machine; and
controlling (S202) the washing machine to enter a non-wake-up status in response to the cumulative wake-up duration being greater than a first set duration.

5. The method according to claim 4, prior to controlling (S202) the washing machine to enter the non-wake-up status, further comprising:
determining that the user has no voice interaction intent for the washing machine, and/or identifying that the voice interaction instruction is not generated within a second set duration from a current moment, the second set duration is less than or equal to the first set duration.

6. The method according to any one of claims 1 to 5, prior to controlling (S101) the washing machine to enter the wake-up status, further comprising:
identifying (S302) a value of target configuration information of the washing machine as a first set value, the first set value is configured to indicate that the washing machine is controlled to enter the wake-up status based on the user's behavior and/or the operating status of the washing machine.

7. The method according to claim 6, further comprising:
identifying (S308) the value of the target configuration information as a second set value, the second set value is configured to indicate that the washing machine is controlled to continuously maintain a non-wake-up status; and
controlling (S309) the washing machine to continuously maintain the non-wake-up status.

8. An apparatus (200) for controlling a washing machine, comprising:
a control module (210), configured to control the washing machine to enter a wake-up status based on a user's behavior and/or an operating status of the washing machine;
a collection module (220), configured to collect voice information of a user; and
a generation module (230), configured to generate a voice interaction instruction for the washing machine based on the voice information,
the control module (210) is further configured to control the washing machine to execute the voice interaction instruction.

9. The apparatus (200) for controlling a washing machine according to claim 8, wherein the control module (210) is further configured to:
control the washing machine to enter the wake-up status in response to the user's behavior being to close a bucket door of the washing machine, and/or in response to the bucket door of the washing machine being in a closed status.

10. The apparatus (200) for controlling a washing machine according to claim 8, wherein the control module (210) is further configured to:
control the washing machine to enter the wake-up status in response to the operating status of the washing machine being to end washing;
optionally, the control module (210) is further configured to:
control the washing machine to enter the wake-up status in response to the user's behavior being to approach the washing machine.

11. The apparatus (200) for controlling a washing machine according to any one of claims 8-10, after controlling the washing machine to enter the wake-up status, the control module (210) is further configured to:
acquire a cumulative wake-up duration of a present wake-up process of the washing machine; and
control the washing machine to enter a non-wake-up status in response to the cumulative wake-up duration being greater than a first set duration.

12. The apparatus (200) for controlling a washing machine according to claim 11, prior to controlling the washing machine to enter the non-wake-up status, the control module (210) is further configured to:
determine that the user has no voice interaction intent for the washing machine, and/or identify that the voice interaction instruction is not generated within a second set duration from a current moment, the second set duration is less than or equal to the first set duration.

13. The apparatus (200) for controlling a washing machine according to any one of claims 8-12, prior to controlling the washing machine to enter the wake-up status, the control module (210) is further configured to:
identify a value of target configuration information of the washing machine as a first set value, the first set value is configured to indicate that the washing machine is controlled to enter the wake-up status based on the user's behavior and/or the operating status of the washing machine.

14. The apparatus (200) for controlling a washing machine according to claim 13, wherein the control module (210) is further configured to:
identify the value of the target configuration information as a second set value, the second set value is configured to indicate that the washing machine is controlled to continuously maintain a non-wake-up status: and
control the washing machine to continuously maintain the non-wake-up status.

15. A non-transitory computer-readable storage medium, storing a computer program instruction, when the computer program instruction is executed by a processor, causes the processor to implements the method according to any one of claims 1 to 7.
